# EUROPÄISCHE PATENTSCHRIFT

(11) **EP 2 931 633 B1**
(45) Veröffentlichungstag und Bekanntmachung des Hinweises auf die Patenterteilung: **02.08.2017**
(21) Anmeldenummer: 13779844.3
(22) Anmeldetag: 22.10.2013
(51) Int. Cl.: B65G 29/00, B65G 54/02, B65G 47/86, B65B 3/04, B65B 7/28

(54) **VORRICHTUNG ZUM BEFÜLLEN VON BEHÄLTNISSEN MIT LINEARANTRIEB**
CONTAINER FILLING MACHINE PROVIDED WITH A LINEAR DRIVE
MACHINE DE REMPLISSAGE DE RÉCIPIENTS POURVU D' UN ENTRAÎNEMENT LINÉAIRE

(30) Priorität: 14.12.2012 DE 102012223173
(43) Veröffentlichungstag der Anmeldung: 21.10.2015
(73) Patentinhaber: Robert Bosch GmbH, 70442 Stuttgart (DE)
(72) Erfinder: ZIEGLER, Jochen, 74589 Satteldorf (DE); GRAN, Sebastian, 35452 Heuchelheim (DE)
(86) Internationale Anmeldenummer: PCT/EP2013/072002
(87) Internationale Veröffentlichungsnummer: WO 2014/090462

(56) Entgegenhaltungen:
- EP-A1- 2 511 203
- EP-B1- 2 057 089
- DE-A1-102012 103 378
- US-B1- 6 876 896
- US-B2- 6 876 107

## Beschreibung

### Stand der Technik

Die vorliegende Erfindung betrifft eine Vorrichtung zum Befüllen von Behältnissen mit einer Linearantriebsanordnung.

Vorrichtungen zum Befüllen von Behältnissen werden beispielsweise im pharmazeutischen Bereich verwendet. In derartigen Befüllvorrichtungen werden üblicherweise sogenannte Transportsterne verwendet, wie beispielsweise aus der DE 10 2009 000 496 A1 bekannt. Hierbei sind mehrere Stationen entlang des Umfangs des Transportsterns angeordnet. Dabei werden an den verschiedenen Stationen unterschiedliche Prozesse ausgeführt, welche üblicherweise unterschiedliche Zeitdauern in Anspruch nehmen. Hierdurch bestimmt jedoch die langsamste Station den Takt des Transportsterns, so dass an anderen Stationen Stillstandszeiten entstehen. Insbesondere beim Einlauf von Behältnissen in den Transportstern und an der Befüllstation können hierbei Probleme auftreten. Es wäre daher wünschenswert, eine Vorrichtung zum Befüllen von Behältnissen zu haben, welche die oben beschriebenen Probleme löst. Weiterhin ist aus der US 6,876,896 B1 eine Vorrichtung gemäß dem Oberbegriff des Anspruches 1 bekannt.

### Offenbarung der Erfindung

Die erfindungsgemäße Vorrichtung zum Befüllen von Behältnissen mit den Merkmalen des Anspruchs 1 weist demgegenüber den Vorteil auf, dass gleichzeitig getaktete und kontinuierliche Bewegungen möglich sind. Insbesondere kann auch ein Schwappverhalten von mit Flüssigkeiten gefüllten Behältnissen verbessert werden, da individuelle Anlaufgeschwindigkeiten und Bremsgeschwindigkeiten von Station zu Station möglich sind. Darüber hinaus kann auf einfache Weise ein Puffer in der Vorrichtung bereitgestellt werden und es ist ein Leerstellenausgleich möglich. Die erfindungsgemäße Vorrichtung kann ferner einfacher aufgebaut sein und benötigt weniger Formatteile. Dies wird erfindungsgemäß dadurch erreicht, dass die Vorrichtung eine Linearantriebsanordnung mit einer geschlossenen Laufstrecke und einer Vielzahl von Läufern umfasst. Dabei sind an der Laufstrecke eine Vielzahl von Stationen einschließlich einer Füllstation zum Befüllen von Behältnissen angeordnet. Eine Steuereinheit ist vorgesehen, um die Läufer individuell anzutreiben und anzuhalten.

Weiterhin ist die geschlossenen und horizontal angeordnete Laufstrecke ein Kreis. Hierdurch kann erfindungsgemäß der Transportstern durch eine kreisförmige Linearantriebsanordnung ersetzt werden. Dabei kann trotzdem ein sehr kompakter und einfacher Aufbau der Vorrichtung erreicht werden.

Ferner umfassen die Läufer Gleitelemente oder Wälzkörper, welche auf der Laufstrecke gleiten oder rollen. Hierdurch wird eine reibungsarme Fortbewegung der Läufer auf der Laufstrecke erreicht.

Darüber hinaus umfasst die Laufstrecke einen Antriebsbereich der Linearantriebsanordnung und einen Laufbereich, wobei die Läufer, beispielsweise mit Gleitelementen oder Wälzkörpern, auf dem Laufbereich bewegt werden und wobei der Laufbereich in einem Winkel zum Antriebsbereich angeordnet ist. Der Winkel ist vorzugsweise ca. 25°.
Die Unteransprüche zeigen bevorzugte Weiterbildungen der Erfindung.
Um einen Puffer auf der Laufstrecke bereitzustellen, ist vorzugsweise eine Anzahl der Läufer um wenigstens 1 größer als eine Anzahl der Stationen an der Laufstrecke.
Weiter bevorzugt ist die Steuereinheit derart eingerichtet, dass Läufer rückwärts antreibbar sind. Hierdurch können Läufer beispielsweise für eine Nachbefüllung wieder zurück zur Füllstation gefahren werden und die Nachbefüllung ausgeführt werden.

Gemäß der Erfindung weist jeder Läufer wenigstens zwei Aufnahmen zur Aufnahme von Behältnissen auf. Dadurch ist es möglich, dass pro Läufer eine Vielzahl von Behältnissen transportiert werden kann, wodurch die Ausbringung der Vorrichtung verbessert werden kann.

Besonders bevorzugt umfasst die Vielzahl von Stationen eine Zufuhrstation zum Zuführen von leeren Behältnissen und/oder eine Wiegestation zum Wiegen von leeren und/oder befüllten Behältnissen, und/oder eine Aufbrennstation zum Öffnen von leeren, geschlossenen Behältnissen und/oder eine Kappenabschleppstation zum Abschleppen von Kappen und Aufsetzen der Kappen auf die befüllten Behältnisse und/oder eine Bördelstation zum Bördeln der Kappen an die Behältnisse und/oder eine Verschlussstation zum Verschließen der Behältnisse und/oder eine Abgabestation zum Abgeben der Behältnisse.

Die erfindungsgemäße Befüllvorrichtung wird erfindungsgemäß im pharmazeutischen Bereich und insbesondere zum Befüllen der Behältnisse mit einem flüssigen Medium verwendet. Hierbei ist die Steuereinheit erfindungsgemäß derart eingerichtet, dass an Stationen, an denen die mit Flüssigkeit befüllten Behältnisse wieder anfahren, ein Anfahrvorgang der Läufer mit einer geringeren Geschwindigkeit als bei Stationen, in denen noch leere Behältnisse bewegt werden, vorgesehen ist.

### Kurze Beschreibung der Zeichnung

Nachfolgend wird unter Bezugnahme auf die begleitende Zeichnung ein bevorzugtes Ausführungsbeispiel der Erfindung im Detail beschrieben. In der Zeichnung ist:
- Figur 1: eine schematische Draufsicht einer Vorrichtung gemäß einem bevorzugten Ausführungsbeispiel der Erfindung,
- Figur 2: eine schematische Draufsicht einer in Figur 1 gezeigten Linearantriebsanordnung und
- Figur 3: eine perspektivische Ansicht der Linearantriebsanordnung.

### Bevorzugte Ausführungsform der Erfindung

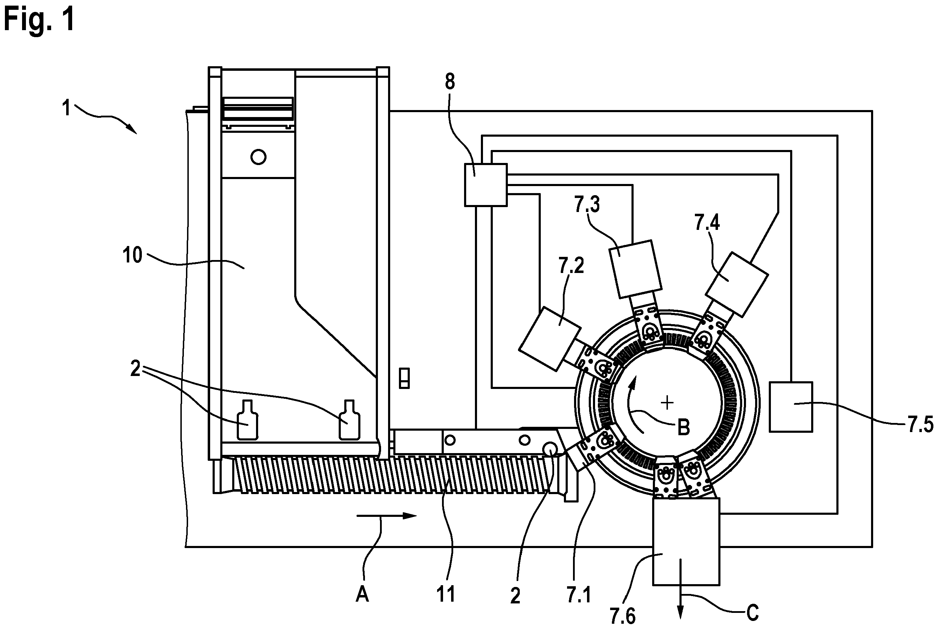

Nachfolgend wird unter Bezugnahme auf die Figuren 1 bis 3 eine Vorrichtung 1 zum Befüllen von Behältnissen 2 im Detail beschrieben.

Die im Ausführungsbeispiel beschriebene Vorrichtung dient zum Befüllen von Behältnissen 2 mit einer pharmazeutischen Flüssigkeit und umfasst eine Rampe 10, auf welcher die leeren Behältnisse 2 nach unten zu einer Förderschnecke 11 rutschen. Die Förderschnecke 11 befördert die leeren Behältnisse in Richtung des Pfeils A zu einer Zufuhrstation 7.1 an einer kreisförmigen Linearantriebsanordnung 3. Die verschiedenen Stationen sind in Figur 1 jeweils durch ein Bezugszeichen 7.x bezeichnet.

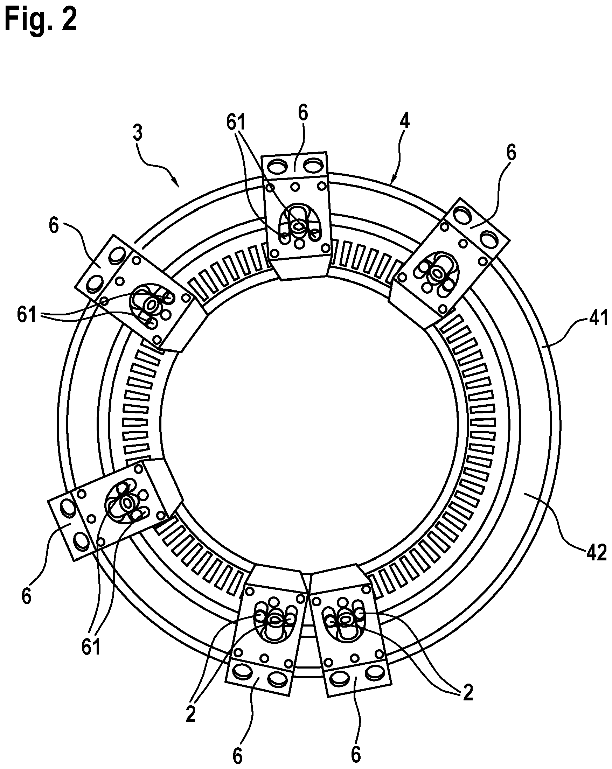

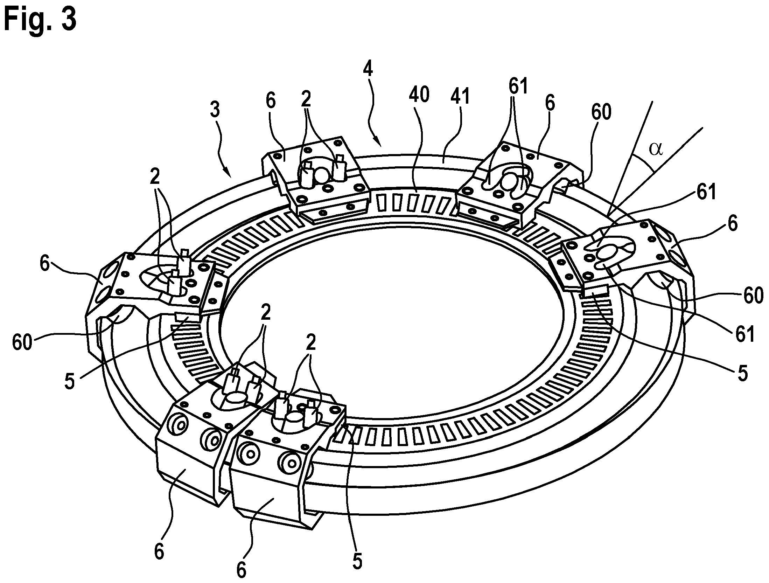

Wie insbesondere aus den Figuren 2 und 3 ersichtlich ist, umfasst die Linearantriebsanordnung 3 eine kreisförmig geschlossene Laufstrecke 4 und eine Vielzahl von Läufern 6, welche entlang der Laufstrecke 4 von Station zu Station bewegt werden. Dies ist in Figur 1 durch den Pfeil B angedeutet. An den Läufern 6 sind dabei Permanentmagnete 5 angeordnet und an der Laufstrecke 4 ist eine Spule angeordnet, so dass die Läufer individuell auf der Laufstrecke 4 bewegt werden können. Hierbei ist sowohl eine Vorwärts- als auch eine Rückwärtsbewegung der Läufer 6 möglich.

Wie aus Figur 1 ersichtlich ist, ist neben der Zufuhrstation 7.1 noch eine Vielzahl von weiteren Stationen entlang des Umfangs der Linearantriebsanordnung 3 vorgesehen. Das Bezugszeichen 7.2 bezeichnet eine Aufbrennstation zum Öffnen der leeren, geschlossenen Behälter 2. Die derart geöffneten leeren Behältnisse 2 werden in einer Füllstation 7.3 mit der pharmazeutischen Flüssigkeit befüllt. In der Füllstation 7.3 ist eine Wiegestation integriert und der Füllstation ist eine Etikettierstation 7.4 nachgeschaltet. Anschließend werden die Behältnisse zu einer Kappenabschleppstation 7.5 weiterbewegt, in welcher einerseits Kappen zum Verschließen der befüllten Behältnisse abgeschleppt werden, welche gleichzeitig auch noch auf die Behältnisse 2 aufgebördelt werden. 7.6 bezeichnet eine Abgabestation zum Ausgeben der befüllten und geschlossenen Behältnisse 2, was durch den Pfeil C angedeutet ist.

Wie insbesondere aus Figur 3 ersichtlich ist, umfassen die Läufer 6 neben dem Permanentmagneten 5 auch noch Rollen 60, welche auf einem Laufbereich 41 der Laufstrecke 4 laufen. Die Laufstrecke 4 umfasst ferner einen Antriebsbereich 40, wobei der Laufbereich 41 in einem Winkel α zum Antriebsbereich 40 angeordnet ist. Wie weiter aus Figur 3 ersichtlich ist, umgreifen die Läufer 6 die Linearantriebsanordnung 3 am äußeren Umfang, so dass eine stabile und sichere Bewegung der Läufer 6 möglich ist.

Jeder der Läufer 6 umfasst zwei Aufnahmen 61, welche zum Aufnehmen der Behältnisse 2 dienen.

Wie insbesondere aus Figur 1 ersichtlich ist, ist ferner eine Steuereinheit 8 vorgesehen, welche die Läufer 6, die einzelnen Stationen 7 entlang der Laufstrecke 4 sowie die Förderschnecke 11 steuert. Hierbei ist die Steuereinheit 8 eingerichtet, die einzelnen Läufer jeweils individuell zu steuern. Dadurch kann insbesondere beispielsweise bei schon befüllten, aber noch offenen Behältnissen 2 ein Anfahrvorgang anders ausgelegt werden als bei noch leeren Behältnissen 2, um ein Schwappverhalten der Flüssigkeit im Behältnis 2 zu optimieren. Ferner kann durch die individuelle Ansteuerung der Läufer 6 es ermöglicht werden, dass einzelne Läufer zwischen Stationen taktweise bewegt werden und andere Läufer durch eine kontinuierliche Bewegung, beispielsweise im Bereich der Kappenabschleppstation 7.5, kontinuierlich bewegt werden. Auch können beispielsweise einzelne Läufer, wenn ein Wiegen ergeben hat, dass eine Befüllung des Behältnisses 2 noch nicht ausreichend ist, wieder zurück zur Füllstation bewegt werden.

Erfindungsgemäß kann somit ein Transportstern durch eine kreisförmig angeordnete Linearantriebsanordnung mit geschlossener Laufstrecke 4 ersetzt werden. Hierbei können einzelne Läufer 6 entweder taktweise oder kontinuierlich, je nach gewünschten Anforderungen, zwischen den Stationen bewegt werden. Somit ist ein individueller Transport der Behältnisse 2 entlang der Laufstrecke 4 möglich, ohne dass ein Vorgang an einer der Stationen 7 einen minimalen Taktzeitraum vorgibt.

## Patentansprüche

1. Vorrichtung zum Befüllen von Behältnissen (2), umfassend
- eine Linearantriebsanordnung (3) mit einer geschlossenen Laufstrecke (4) und einer Vielzahl von Läufern (6) zum Aufnehmen und Transportieren der Behältnisse (2),
- eine Vielzahl von Stationen (7), welche an der Laufstrecke (4) angeordnet sind, wobei die Vielzahl von Stationen wenigstens eine Füllstation (7.3 ) zum Befüllen der Behältnisse (2) umfasst, und
- eine Steuereinheit (8), welche eingerichtet ist, die Läufer (6) individuell anzutreiben und anzuhalten,
- wobei die Läufer (6) Gleitelemente oder Wälzkörper (60) aufweisen, welche auf der Laufstrecke (4) gleiten oder rollen,
**dadurch gekennzeichnet, dass**
- die Vorrichtung zum Befüllen von Behältnissen (2) mit einem flüssigen Medium im pharmazeutischen Bereich eingerichtet ist,
- die geschlossene Laufstrecke (4) einen Kreis definiert, und horizontal angeordnet ist, und jeder Läufer (6) wenigstens zwei Aufnahmen (61) zur Aufnahme der Behältnisse (2) aufweist,
- die Laufstrecke (4) einen Antriebsbereich (40) der Linearantriebsanordnung (3) und einen Laufbereich (41) umfasst, wobei der Laufbereich (41) in einem Winkel (α) zum Antriebsbereich (40) angeordnet ist, und
- die Steuereinheit (8) eingerichtet ist, an Stationen, an denen Läufer (6) mit mit Flüssigkeit befüllten Behältnissen (2) wieder anfahren, einen Anfahrvorgang der Läufer (6) individuell mit einer geringeren Geschwindigkeit als bei Stationen, in denen noch leere Behältnisse (2) bewegt werden, zu steuern.

2. Vorrichtung nach Anspruch 1, **dadurch gekennzeichnet, dass** der Winkel (α) ca. 25° beträgt.

3. Vorrichtung nach einem der vorhergehenden Ansprüche, **dadurch gekennzeichnet, dass** die Läufer (6) die Linearantriebsanordnung (3) am äußeren Umfang umgreifen.

4. Vorrichtung nach einem der vorhergehenden Ansprüche, **dadurch gekennzeichnet, dass** eine Anzahl der Läufer (6) um wenigstens 1 größer ist als eine Anzahl der Stationen (7).

5. Vorrichtung nach einem der vorhergehenden Ansprüche, **dadurch gekennzeichnet, dass** die Steuereinheit (8) eingerichtet ist, Läufer (6) rückwärts anzutreiben.

6. Vorrichtung nach einem der vorhergehenden Ansprüche, **dadurch gekennzeichnet, dass** die Vielzahl von Stationen ferner eine Zufuhrstation (7.1) zum Zuführen von leeren Behältnissen (2) und/oder eine Wiegestation (7.4) zum Wiegen von leeren und/oder befüllten Behältnissen (2) und/oder eine Aufbrennstation (7.2) zum Öffnen von leeren, geschlossenen Behältnissen (2) und/oder eine Kappenabschleppstation (7.5) zum Abschleppen von Kappen und Aufsetzen der Kappen auf die befüllten Behältnisse (2) und/oder eine Bördelstation zum Bördeln der Kappen an das Behältnis (2) und/oder eine Verschlussstation zum Verschließen der Behältnisse (2) und/oder eine Abgabestation (7.6) zum Abgeben der Behältnisse (2) umfasst.

## Claims

1. Apparatus for filling containers (2), comprising
- a linear-drive arrangement (3) having a closed running path (4) and a multiplicity of runners (6) for accommodating and transporting the containers (2),
- a multiplicity of stations (7), which are arranged on the running path (4), wherein the multiplicity of stations comprise at least one filling station (7.3) for filling the containers (2), and
- a control unit (8), which is intended to drive, and to stop, the runners (6) individually,
- wherein the runners (6) have sliding elements or rolling-contact bodies (60), which slide or roll on the running path (4),
**characterized in that**
- the apparatus is intended for filling containers (2) with a liquid medium in the pharmaceutical sector,
- the closed running path (4) defines a circle and is arranged horizontally, and each runner (6) has at least two mounts (61) for accommodating the containers (2),
- the running path (4) comprises a driving region (40) of the linear-drive arrangement (3) as well as a running region (41), wherein the running region (41) is arranged at an angle (α) to the driving region (40), and
- the control unit (8) is intended such that, at stations at which runners (6) with liquid-filled containers (2) start up again, it controls a start-up operation of the runners (6) individually at a lower speed than in stations in which still-empty containers (2) are being moved.

2. Apparatus according to Claim 1, **characterized in that** the angle (α) is approximately 25°.

3. Apparatus according to either of the preceding claims, **characterized in that** the runners (6) engage around the outer circumference of the linear-drive arrangement (3).

4. Apparatus according to one of the preceding claims, **characterized in that** the number of runners (6) is at least 1 greater than the number of stations (7).

5. Apparatus according to one of the preceding claims, **characterized in that** the control unit (8) is intended to drive runners (6) backwards.

6. Apparatus according to one of the preceding claims, **characterized in that** the multiplicity of stations also comprise a feeding station (7.1) for feeding empty containers (2) and/or a weighing station (7.4) for weighing empty and/or filled containers (2) and/or a burning-open station (7.2) for opening empty, closed containers (2) and/or a cap-recovery station (7.5) for recovering caps and positioning the caps on the filled containers (2) and/or a crimping station for crimping caps onto the container (2) and/or a closure station for closing the containers (2) and/or a discharging station (7.6) for discharging the containers (2).

## Revendications

1. Dispositif de remplissage de récipients (2), comprenant
- un système d'entraînement linéaire (3) avec une trajectoire de déplacement fermée (4) et une pluralité d'organes mobiles (6) pour recevoir et transporter les récipients (2),
- une pluralité de postes (7) qui sont disposés sur la trajectoire de déplacement (4), la pluralité de postes comprenant au moins un poste de remplissage (7.3) pour remplir les récipients (2), et
- une unité de commande (8) qui est prévue pour entraîner et retenir individuellement les organes mobiles (6),
- les organes mobiles (6) présentant des éléments de glissement ou des corps de roulement (60), qui glissent ou roulent sur la trajectoire de déplacement (4),
**caractérisé en ce que**
- le dispositif de remplissage de récipients (2) est pourvu d'un milieu liquide dans le domaine pharmaceutique,
- la trajectoire de déplacement fermée (4) définit un cercle, et est disposée horizontalement, et chaque curseur (6) présente au moins deux logements (61) pour recevoir les récipients (2),
- la trajectoire de déplacement (4) comprend une région d'entraînement (40) du système d'entraînement linéaire (3) et une région de roulement (41), la région de roulement (41) étant disposée suivant un angle (α) par rapport à la région d'entraînement (40), et
- l'unité de commande (8) étant prévue, au niveau de postes au niveau desquels des organes mobiles (6) se remettent en mouvement avec des récipients (2) remplis de liquide, pour commander une opération de lancement des organes mobiles (6) individuellement avec une vitesse plus faible que dans le cas de postes dans lesquels des récipients encore vides (2) sont déplacés.

2. Dispositif selon la revendication 1, **caractérisé en ce que** l'angle (α) vaut environ 25°.

3. Dispositif selon l'une quelconque des revendications précédentes, **caractérisé en ce que** les organes mobiles (6) viennent en prise autour du système d'entraînement linéaire (3) au niveau de la périphérie extérieure.

4. Dispositif selon l'une quelconque des revendications précédentes, **caractérisé en ce qu'**un nombre d'organes mobiles (6) est au moins supérieur de 1 au nombre des postes (7).

5. Dispositif selon l'une quelconque des revendications précédentes, **caractérisé en ce que** l'unité de commande (8) est prévue pour entraîner des organes mobiles (6) vers l'arrière.

6. Dispositif selon l'une quelconque des revendications précédentes, **caractérisé en ce que** la pluralité de postes comprend en outre un poste d'alimentation (7.1) pour alimenter des récipients vides (2) et/ou un poste de pesée (7.4) pour peser des récipients vides et/ou remplis (2) et/ou un poste d'ouverture par combustion (7.2) pour ouvrir des récipients vides et fermés (2) et/ou un poste d'entraînement de couvercles (7.5) pour entraîner des couvercles et déposer les capuchons sur les récipients remplis (2) et/ou un poste de bordage pour le bordage des couvercles sur les récipients (2) et/ou un poste de fermeture pour fermer les récipients (2) et/ou un poste de dépose (7.6) pour déposer les récipients (2).
